# FASCICULE DE BREVET EUROPEEN

(11) **EP 2 067 137 B1**
(45) Date de publication et mention de la délivrance du brevet: **28.08.2019**
(21) Numéro de dépôt: 07858393.7
(22) Date de dépôt: 28.09.2007
(51) Int. Cl.: G10K 11/168, B60R 13/08

(54) **COMPOSANT D'INSONORISATION POUR ORGANE STRUCTUREL RIGIDE D' AUTOMOBILE**
SCHALLDÄMPFUNGSKOMPONENTE FÜR EIN STARRES BAUTEIL EINES AUTOS
SOUND INSULATION COMPONENT FOR A RIGID STRUCTURAL MEMBER OF AN AUTOMOBILE

(30) Priorité: 29.09.2006 FR 0608562
(43) Date de publication de la demande: 10.06.2009
(73) Titulaire: Faurecia Automotive Industrie, 92000 Nanterre (FR)
(72) Inventeur: BISCHOFF, Lars, D-38114 Braunschweig (DE); DUVAL, Arnaud, 08000 CHARLEVILLE-MEZIERES (FR)
(74) Mandataire: Lavoix
(86) Numéro de dépôt international: PCT/FR2007/001596
(87) Numéro de publication internationale: WO 2008/040870

(56) Documents cités:
- WO-A-01/92086
- WO-A-99/58371
- WO-A1-03/069596
- US-B1- 6 569 509

## Description

La présente invention concerne un composant d'insonorisation pour organe structurel rigide, notamment d'automobile.

Dans une automobile, il est souhaitable d'insonoriser le compartiment des passagers. On utilise à cet effet une "isolation" qui empêche l'entrée d'ondes acoustiques à moyennes et hautes fréquences dans l'espace insonorisé, essentiellement par réflexion des ondes vers les sources de bruit ou l'extérieur de l'espace insonorisé, et une "absorption acoustique" qui dissipe l'énergie des ondes acoustiques (à moyennes et hautes fréquences) dans un matériau absorbant.

Il est relativement simple d'obtenir une bonne insonorisation à hautes fréquences avec des moyens simples, mais, dans le domaine des moyennes fréquences (surtout entre 400 et 1 000 Hz), le problème de l'insonorisation est d'autant plus aigu que l'oreille humaine est très sensible dans cette gamme de fréquences.

On utilise déjà pour cette insonorisation un système masse-ressort assurant essentiellement une isolation, notamment au niveau du tablier séparant l'habitacle du compartiment moteur d'une automobile. Une couche d'un matériau à effet ressort, telle qu'une mousse ayant éventuellement des propriétés viscoélastiques, porte une couche d'un matériau du type "masse lourde", c'est-à-dire la couche représentant la masse du système masse-ressort. Un tel système masse- ressort est connu pour la bonne isolation qu'il assure. Le document GB-2 163 388 décrit un tel système masse-ressort dont la partie de masse lourde comporte deux couches.

Le problème posé par ce système est que, du fait de sa faible absorption, la couche formant masse lourde doit avoir une masse surfacique importante de l'ordre de 3 à 7 kg/m². En outre, un tel système est peu efficace dans le domaine des moyennes fréquences.

Comme on cherche à alléger les automobiles pour des raisons de réduction de consommation, de pollution, etc., le document WO 98/18 657 a proposé un système ayant deux couches de résistances différentes au passage de l'air. Dans ce système, une couche poreuse de découplage est au contact de l'organe structurel de support, tel qu'une tôle, de préférence avec interposition partielle d'air, et elle est surmontée d'une autre couche poreuse 22. Dans un exemple, une couche est un feutre phénolique comprimé, et l'autre un feutre souple non comprimé. L'action de ce système est due à sa double perméabilité, c'est-à-dire à la différence de résistance au passage de l'air entre les couches poreuses. L'avantage de ce système est qu'il est léger, mais son inconvénient est qu'il n'assure pratiquement pas d'isolation.

Le document WO 03/069 596 décrit un système d'insonorisation élaboré qui comprend deux groupes de couches : un groupe de couches comprend une couche de type masse lourde associée à une couche poreuse formant ressort. Ce groupe constitue un système masse-ressort de type classique, mais la masse de la couche lourde et l'épaisseur de la couche formant ressort sont réduites, par exemple d'un tiers à la moitié, par rapport au système classique. L'autre groupe de couches comprend une couche poreuse, de type ressort acoustique, et une couche extérieure qui présente une résistance élevée au passage de l'air. Cette couche extérieure peut être un feutre ayant une résistivité au passage de l'air de 3 à 20 fois supérieure à celle de l'autre couche poreuse.

Ce document WO 03/069 596 décrit ainsi un système perfectionné qui combine le système masse-ressort au système à complexe d'insonorisation ayant des couches présentant des résistances au passage de l'air qui sont différentes, et donne d'excellents résultats d'insonorisation avec un poids réduit.

On a aussi envisagé un perfectionnement de l'ensemble d'insonorisation décrit dans ce document WO 03/069 596, c'est-à-dire comprenant des couches superposées qui comporte un premier groupe de couches ayant une bonne résistance au passage de l'air, et un second groupe de couches à fonction masse-ressort: ; selon ce perfectionnement:, le premier groupe de couches est réalisé afin qu'il comprenne une couche d'une mousse à cellules ouvertes de porosité élevée, de tortuosité élevée et de bonne résistance au passage de l'air, cette couche ayant, grâce à sa tortuosité élevée, d'excellentes propriétés d'absorption acoustique aux fréquences moyennes et hautes. La tortuosité, qui correspond à la pente de la courbe représentant la variation du carré de l'indice de réfraction pour la longueur d'onde acoustique utilisée en fonction de l'inverse de la racine carrée de la fréquence, est liée à la forme des trajets de circulation dans un matériau poreux. Les mousses à cellules ouvertes couramment utilisées ont une tortuosité comprise entre 1 et 1,35, et une tortuosité élevée de préférence de l'ordre de 1,5 à 2,5.

Ainsi, selon ce perfectionnement, le "complexe d'insonorisation" du document WO 03/069 596 est remplacé par une couche unique d'un matériau de tortuosité élevée.

On s'est maintenant rendu compte selon l'invention que, lorsque le système d'insonorisation décrit dans le document précité WO 03/069 596 ou son perfectionnement précité était séparé en deux parties placées de part et d'autre de l'organe structurel rigide associé, on pouvait obtenir soit, avec des éléments constituants identiques, une insonorisation bien meilleure, soit, pour une insonorisation pratiquement identique, une réduction de poids du composant de 25 % au moins par rapport au système masse-ressort classique.

US 6 569 509 B1 décrit une couche de base et plusieurs couches comprenant une couche de recouvrement disposées sur un même côté de la couche de base.

Le document WO 99/58371 décrit un composant d'insonorisation incluant un organe structurel et constitué d'une plaque protectrice rigide montée du côté extérieur de l'organe structurel et à distance de celui-ci, et d'un isolant acoustique éventuel monté entre l'organe structurel et la plaque protectrice.

Le document WO 01/92086 décrit une réalisation de composant d'insonorisation de plancher dont l'élément essentiel est un organe structurel "épais", c'est-à-dire constitué d'une âme en nid d'abeilles entourée par deux couches rigides. Cette âme en nid d'abeilles forme une couche d'air d'épaisseur importante.

Plus précisément, selon l'invention, la partie formant complexe d'insonorisation ayant des couches dont les résistances au passage de l'air sont différentes est disposée du côté de l'organe structurel tourné vers la source de bruit, et le système masse-ressort est disposé du côté à insonoriser, par exemple du côté du compartiment des passagers d'un véhicule automobile.

On dispose parfois, sur le tablier séparant le compartiment moteur de l'habitacle, une simple couche de mousse ou de feutre, parfois munie d'un élément de décor. Cette couche, incorporée pour des raisons de protection et d'esthétique, n'a pas de fonction d'insonorisation. Ceci découle en particulier du fait que cette couche ne couvre qu'une partie de la surface du tablier, de sorte que les parties de tablier non couvertes forment un court-circuit ou trajet acoustique préférentiel, annulant l'effet d'insonorisation que pourrait avoir une telle couche.

L'invention supprime cet effet de court-circuit acoustique parce que les surfaces opposées de l'organe structurel qui sont couvertes par le système masse-ressort d'une part et par le complexe d'insonorisation ou système d'absorption acoustique d'autre part sont pratiquement en regard et de même étendue.

Plus précisément, l'invention concerne un composant d'insonorisation pour organe structurel rigide, comprenant un système masse-ressort comportant au moins une couche de masse lourde et une couche formant ressort, et un système d'absorption acoustique à deux couches ayant des résistances différentes au passage de l'air, l'organe structurel rigide étant une tôle, dans lequel le système masse-ressort est disposé d'un côté de l'organe structurel rigide, le système d'absorption acoustique étant disposé de l'autre côté de l'organe structurel rigide, les surfaces opposées de l'organe structure rigide qui sont couvertes par le système masse-ressort d'une part et par le système d'absorption acoustique d'autre part étant en regard et de même étendue, dans lequel une première des deux couches du système d'absorption acoustique a une résistance réglable au passage de l'air, la première des deux couches du système d'absorption acoustique étant formée d'un non-tissé, le non-tissé présentant une résistance au passage de l'air comprise entre 300 et 2500 N.s/m³ et sa masse surfacique étant comprise entre 20 g/m² et 200 g/m².

Le non-tissé est avantageusement à base de polyester non saturé combiné à de la cellulose ou du nylon.

De préférence, la seconde des deux couches est poreuse et souple. De préférence, la seconde des deux couches est formée d'un matériau choisi parmi un feutre et une mousse.

Dans un mode de réalisation, le système d'absorption acoustique comporte une couche de mousse à tortuosité élevée.

De préférence, la couche formant ressort est adjacente à l'organe structurel rigide. Par exemple, la couche formant ressort est une mousse.

Dans un mode de réalisation particulièrement performant, le composant comporte en outre, du côté du système masse-ressort opposé à l'organe structurel rigide, un complexe d'insonorisation formé soit de deux couches ayant des résistances au passage de l'air qui sont différentes, soit d'une couche de mousse à tortuosité élevée.

L'invention concerne également une automobile, comportant :
- un compartiment des passagers, et
- un composant d'insonorisation tel que décrit ci-dessus, dans lequel l'organe structurel rigide sépare le compartiment des passagers et un espace choisi parmi un compartiment moteur, un passage de roue, et un dispositif d'échappement.

D'autres caractéristiques et avantages de l'invention seront mieux compris à la lecture de la description qui suit, faite en référence aux dessins annexés sur lesquels :
la figure 1 représente un système classique du type décrit dans le document WO 03/069 596 ;
la figure 2 représente un système d'insonorisation selon l'invention ;
la figure 3 comprend un système perfectionné selon le document WO 03/069 596 par rapport au système représenté sur la figure 2 ; et
la figure 4 comprend un système perfectionné selon le perfectionnement du document WO 03/069 596 par rapport au système représenté sur la figure 2.

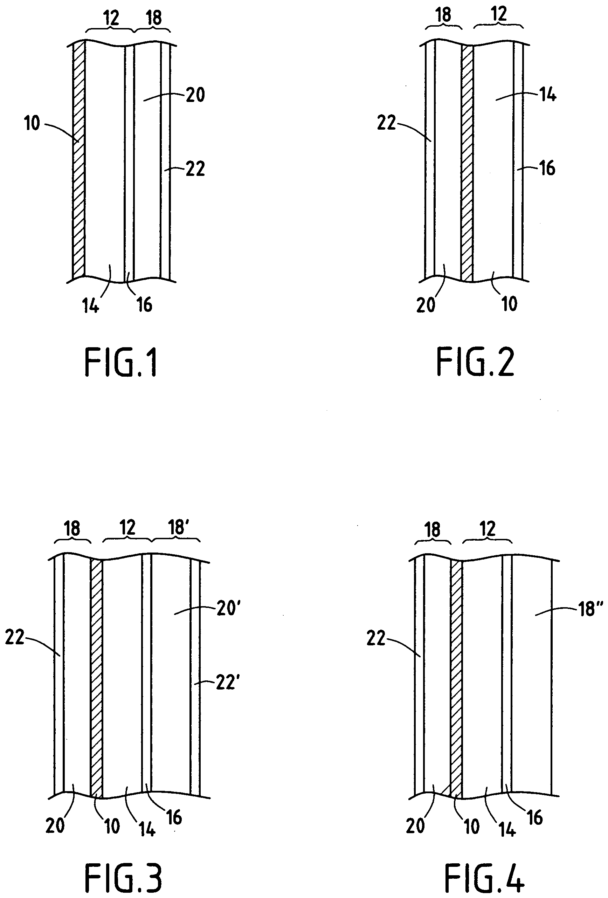

La figure 1 représente schématiquement en coupe la structure d'un composant d'insonorisation selon le document WO 03/069 596 associé à un organe structurel rigide 10, par exemple une tôle.

Le composant comprend un système masse-ressort 12 qui comporte une couche 14 formant ressort, par exemple un feutre ou une mousse, et une couche 16 de masse lourde, par exemple à base d'un élastomère chargé d'une matière minérale.

Le composant comporte aussi un système ou complexe 18 d'insonorisation par absorption acoustique qui comprend une couche 20, par exemple de feutre ou de mousse, présentant une résistance déterminée au passage de l'air, et une couche poreuse 22 ayant une résistance élevée au passage de l'air, cette résistance étant de préférence réglable. Cette couche extérieure 22 est avantageusement formée d'un non-tissé. Bien qu'elle ne soit pas représentée, une moquette peut être disposée sur la couche 22.

Le composant d'insonorisation représenté sur la figure 1 donne des caractéristiques d'insonorisation équivalentes à celles d'un composant du système masse-ressort, mais avec une réduction de poids atteignant 50 % dans certains cas. Il est donc très avantageux d'utiliser un tel composant pour son faible poids.

On s'est maintenant rendu compte selon l'invention que, lorsqu'on utilisait le composant décrit dans le document WO 03/069 596, si on plaçait le système masse-ressort 12 d'un côté de l'organe structurel 10 et le complexe d'insonorisation par absorption 18 de l'autre côté de cet organe structurel 10, on obtenait des propriétés d'insonorisation encore meilleures.

La figure 2 représente un tel système. On a utilisé les mêmes références que sur la figure 1 pour désigner les éléments analogues.

Lorsqu'on réalise le système représenté sur la figure 2, c'est-à-dire dans lequel le système masse-ressort 12 est placé vers le compartiment des passagers d'un véhicule et le complexe d'insonorisation 18 est placé vers le compartiment moteur, l'isolation acoustique augmente de 10 à 35 dB entre 1 000 et 8 000 Hz par rapport au système décrit dans le document précité WO 98/18 657.

Comme on cherche à réduire le poids des composants des automobiles, cette propriété, pour des performances acoustiques analogues, correspond à une réduction de poids du composant d'insonorisation d'une valeur de l'ordre de 25 % par rapport au système masse-ressort classique.

La figure 3 représente une variante du composant de la figure 2 donnant une insonorisation encore plus grande. Dans ce composant, un complexe d'insonorisation par absorption 18', analogue au complexe 18 mais pouvant avoir une moindre épaisseur, est disposé à l'intérieur en coopération avec le système masse-ressort 12. Un tel système permet une réduction de poids qui peut atteindre 35 % par rapport au système masse-ressort classique.

Les natures et caractéristiques des différentes couches utilisées peuvent être identiques à celles qui sont décrites dans le document précité WO 03/069 596.

La figure 4 représente une autre variante du composant de la figure 2 donnant aussi une insonorisation encore plus grande et correspondant au perfectionnement déjà décrit du composant du document précité WO 03/069 596. Les références identiques à celles de la figure 3 désignent des éléments analogues.

Dans ce composant, le complexe d'insonorisation par absorption 18' est remplacé par une seule couche 18" de tortuosité élevée, par exemple une couche formée d'une mousse de polyuréthanne de tortuosité voisine de 2, ayant une masse surfacique de 0,6 kg/m² et ayant une épaisseur de 10 mm.

Selon un autre perfectionnement par rapport aux documents déjà décrits, il est particulièrement intéressant d'utiliser pour les couches 22, 22' des non-tissés thermo-formables légers , par exemple à base de polyester non saturé associé à de la cellulose ou du nylon ("Ahlstrom" ou "3M"), pouvant: donner des résistances au passage de l'air de 300 à 2 500 N.s/m³ pour une masse surfacique seulement de l'ordre de 20 à 200 g/m². De tels non-tissés permettent facilement l'obtention d'une résistance réglable au passage de l'air.

Il faut remarquer que le composant représenté sur la figure 2 est plus efficace vers les moyennes fréquences, alors que le composant représenté sur la figure 3 est plus efficace vers des fréquences plus élevées.

La couche la plus éloignée de l'organe structurel, vers l'intérieur du véhicule, peut constituer une couche décorative ou porter une telle couche.

Grâce à une couche du système d'absorption acoustique qui a une résistance réglable au passage de l'air, formée avantageusement d'un non-tissé, associée à une couche poreuse souple, donnant un effet de différence de résistance au passage de l'air, les propriétés acoustiques peuvent être optimisées, notamment en fonction des caractéristiques acoustiques de chacun des deux côtés de l'organe structurel : nature de la source de bruit (bruit de moteur, de roulement, d'échappement, etc.), propriétés de la cavité réceptrice (compartiment des passagers, etc.), etc.

Pour des éléments constituants identiques à ceux d'un composant d'insonorisation selon le document WO 98/18 657, un composant d'insonorisation selon l'invention donne un gain de 10 à 35 dB pour l'isolation. Par rapport au système masse-ressort classique et pour des performances acoustiques pratiquement identiques, le gain de poids peut atteindre 25 % dans le cas de la figure 2 et 35 % dans le cas de la figure 3, suivant la forme des cavités d'émission et de réception.

Les parties de véhicule auxquelles de tels composants sont bien adaptés sont très nombreuses, en plus de la cloison séparant le compartiment moteur du compartiment des passagers. On peut citer en particulier les passages de roue, les planchers et les parties proches de l'échappement.

Ainsi, selon l'invention, le complexe d'insonorisation, qui fonctionne essentiellement par absorption acoustique, est placé du côté de la source de bruit ; il assure ainsi l'adaptation du composant d'insonorisation au spectre d'émission de la source de bruit (par exemple le moteur ou le roulement des pneumatiques), alors que l'autre partie, constituée d'un système masse-ressort simple ou perfectionné suivant le document précité WO 03/069 596 ou son perfectionnement (figures 3 et 4), assure essentiellement l'isolation du compartiment des passagers. En conséquence, ce système masse-ressort, simple ou perfectionné, peut être pratiquement le même pour les diverses sources de bruit, c'est-à-dire quel que soit son emplacement dans l'habitacle (tablier avant, plancher ou passage de roue).

## Revendications

1. Composant d'insonorisation pour organe structurel rigide, comprenant un système masse-ressort (12), comportant au moins une couche de masse lourde (16) et une couche formant ressort (14) et un système d'absorption acoustique (18) à deux couches ayant des résistances différentes au passage de l'air, l'organe structurel rigide (10) étant une tôle, dans lequel le système masse-ressort (12) est disposé d'un côté de l'organe structurel rigide (10), le système d'absorption acoustique (18) étant disposé de l'autre côté de l'organe structurel rigide (10), les surfaces opposées de l'organe structurel rigide (10) qui sont couvertes par le système masse-ressort (12) d'une part et par le système d'absorption acoustique (18) d'autre part étant en regard et de même étendue; dans lequel une première des deux couches du système d'absorption acoustique (18) a une résistance réglable au passage de l'air, **caractérisé en ce que** la première des deux couches du système d'absorption acoustique (18) est formée d'un non-tissé, le non-tissé présentant une résistance au passage de l'air comprise entre 300 N.s/m³ et 2500 N.s/m³ et sa masse surfacique étant comprise entre 20 g/m² et 200 g/m².

2. Composant d'insonorisation selon la revendication 1, **caractérisé en ce que** le non-tissé est à base de polyester non saturé combiné à de la cellulose ou du nylon.

3. Composant d'insonorisation selon l'une quelconque des revendications précédentes, **caractérisé en ce que** la seconde (20) des deux couches du système d'absorption acoustique (18) est poreuse et souple.

4. Composant d'insonorisation selon la revendication 3, **caractérisé en ce que** la seconde (20) des deux couches du système d'absorption acoustique (18) est formée d'un matériau choisi parmi un feutre et une mousse.

5. Composant d'insonorisation selon l'une quelconque des revendications précédentes, **caractérisé en ce que** le système d'absorption acoustique (18) comporte une couche de mousse à tortuosité élevée.

6. Composant d'insonorisation selon l'une quelconque des revendications précédentes, **caractérisé en ce que** la couche formant ressort (14) est adjacente à l'organe structurel rigide (10).

7. Composant d'insonorisation selon l'une quelconque des revendications précédentes, **caractérisé en ce qu'**il comporte en outre, du côté du système masse-ressort (12) opposé à l'organe structurel rigide (10), un complexe d'insonorisation (18') choisi parmi un complexe ayant deux couches (20', 22') ayant des résistances au passage de l'air qui sont différentes, et un complexe formé d'une couche (18") de mousse à tortuosité élevée.

8. Automobile, comportant :
- un compartiment des passagers, et
- un composant d'insonorisation selon l'une quelconque des revendications précédentes, dans lequel l'organe structurel rigide (10) sépare le compartiment des passagers et un espace choisi parmi un compartiment moteur, un passage de roue, et un dispositif d'échappement.

## Patentansprüche

1. Schalldämpfungskomponente für ein starres Strukturelement, aufweisend ein Masse-Feder-System (12), welches zumindest eine Schwere-MasseSchicht (16) und eine Feder-bildende Schicht (14) aufweist, und ein Akustische-Absorption-System (18) mit zwei Schichten, die unterschiedliche Luftdurchlass-Widerstände haben, wobei das starre Strukturelement (10) ein Blech ist, wobei das Masse-Feder-System (12) auf einer Seite des starren Strukturelements (10) angeordnet ist, wobei das Akustische-Absorption-System (18) auf der anderen Seite des starren Strukturelements (10) angeordnet ist, wobei die entgegengesetzten Flächen des starren Strukturelements (10), die einerseits mit dem Masse-Feder-System (12) und andererseits mit dem Akustische-Absorption-System (18) bedeckt sind, gegenüberliegend und gleicher Ausdehnung sind, wobei eine erste der zwei Schichten des Akustische-Absorption-Systems (18) einen hinsichtlich des Luftdurchlasses einstellbaren Widerstand hat, **dadurch gekennzeichnet, dass** die erste der zwei Schichten des Akustische-Absorption-Systems (18) aus Vlies gebildet ist, wobei das Vlies einen Luftdurchlass-Widerstand hat, der zwischen 300 N.s/m³ und 2500 N.s/m³ liegt, und seine Flächenmasse zwischen 20 g/m² und 200 g/m² liegt.

2. Schalldämpfungskomponente gemäß Anspruch 1, **dadurch gekennzeichnet, dass** das Vlies auf ungesättigtem Polyester kombiniert mit Cellulose oder Nylon basiert.

3. Schalldämpfungskomponente gemäß irgendeinem der vorherigen Ansprüche, **dadurch gekennzeichnet, dass** die zweite (20) der zwei Schichten des Akustische-Absorption-Systems (18) porös und flexibel ist.

4. Schalldämpfungskomponente gemäß Anspruch 3, **dadurch gekennzeichnet, dass** die zweite (20) der zwei Schichten des Akustische-Absorption-Systems (18) aus einem Material gebildet ist, welches aus einem Filz und einem Schaum ausgewählt ist.

5. Schalldämpfungskomponente gemäß irgendeinem der vorherigen Ansprüche, **dadurch gekennzeichnet, dass** das Akustische-Absorption-System (18) eine Schicht aus Schaum mit hoher Tortuosität aufweist.

6. Schalldämpfungskomponente gemäß irgendeinem der vorherigen Ansprüche, **dadurch gekennzeichnet, dass** die Feder-bildende Schicht (14) an das starre Strukturelement (10) angrenzend ist.

7. Schalldämpfungskomponente gemäß irgendeinem der vorherigen Ansprüche, **dadurch gekennzeichnet, dass** sie ferner auf der Seite des Masse-FederSystems (12), die entgegengesetzt zu dem starren Strukturelement (10) ist, einen Schalldämpfungskomplex (18') aufweist, der ausgewählt ist aus einem Komplex, der zwei Schichten (20', 22') hat, die Luftdurchlass-Widerstände haben, die unterschiedlich sind, und einem Komplex, der aus einer Schicht (18") aus Schaum mit hoher Tortuosität gebildet ist.

8. Automobil, welches aufweist:
- einen Fahrgastraum und
- eine Schalldämpfungskomponente gemäß irgendeinem der vorherigen Ansprüche, wobei das starre Strukturelement (10) den Fahrgastraum und einen Raum trennt, der aus einem Motorraum, einem Radkasten und einer AbgasVorrichtung ausgewählt ist.

## Claims

1. Sound-proofing component for a rigid structural member, comprising a mass/spring system (12) which comprises at least one layer (16) of heavy mass and a layer (14) which forms a spring, and an acoustic absorption system (18) having two layers which have differing levels of resistance to air passage, the rigid structural member (10) being a metal sheet, the mass/spring system (12) being arranged at one side of the rigid structural member (10), the acoustic absorption system (18) being arranged at the other side of the rigid structural member (10), and the opposing surfaces of the rigid structural member (10) which are covered by the mass/spring system (12) on the one side and the acoustic absorption system (18) on the other side being opposite each other and of the same size, wherein a first of the two layers of the acoustic absorption system (18) has an adjustable level of resistance to air passage, **characterised in that** the first of the two layers of the acoustic absorption system (18) is formed by a non-woven material, the non-woven material presenting a resistance to air passage comprised between 300 N.s/m³ and 2500 N.s/m³ and its mass surface density being comprised between 20 g/m² and 200 g/m².

2. Sound-proofing component according to claim 1, **characterised in that** the non-woven material is based on an unsaturated polyester combined with cellulose or nylon.

3. Sound-proofing component according to any one of the preceding claims, **characterised in that** the second (20) of the two layers of the acoustic absorption system (18) is porous and flexible.

4. Sound-proofing component according to claim 3, **characterised in that** the second (20) of the two layers of the acoustic absorption system (18) is formed by a material selected from a felt and a foam.

5. Sound-proofing component according to any one of the preceding claims, **characterised in that** the acoustic absorption system (18) comprises a layer of foam which has a high level of complexity.

6. Sound-proofing component according to any one of the preceding claims, **characterised in that** the layer forming a spring (14) is adjacent to the rigid structural member (10).

7. Sound-proofing component according to any one of the preceding claims, **characterised in that** it further comprises, at the side of the spring/mass system (12) opposite the rigid structural member (10), a sound-proofing complex (18') which is selected from a complex which has two layers (20', 22') which have differing levels of resistance to air passage, and a complex formed by a layer (18'') of foam which has a high level of complexity.

8. Automobile, comprising:
- a passenger compartment, and
- a sound-proofing component according to any one of the preceding claims, wherein the rigid structural member (10) separates the passenger compartment and a space selected from an engine compartment, a wheel housing, and an exhaust device.
